# EUROPEAN PATENT SPECIFICATION

(11) **EP 3 086 920 B1**
(45) Date of publication and mention of the grant of the patent: **24.07.2019**
(21) Application number: 14873697.8
(22) Date of filing: 17.12.2014
(51) Int. Cl.: B33Y 70/00, B33Y 10/00, B33Y 30/00, B33Y 50/02, B29C 64/165, B29C 64/386, B29C 64/40, B29K 105/00

(54) **METHODS AND SYSTEMS FOR THREE-DIMENSIONAL PRINTING UTILIZING MULTIPLE BINDER FLUIDS**
VERFAHREN UND SYSTEME FÜR DREIDIMENSIONALES DRUCKEN MITTELS MEHRERER BINDEMITTELFLÜSSIGKEITEN
PROCÉDÉS ET SYSTÈMES D'IMPRESSION TRIDIMENSIONNELLE AU MOYEN DE FLUIDES LIANTS MULTIPLES

(30) Priority: 23.12.2013 US 201361919961 P; 23.12.2013 US 201361919883 P
(43) Date of publication of application: 02.11.2016
(73) Proprietor: The Exone Company, North Huntingdon, PA 15642 (US)
(72) Inventor: KUHN, Howard, A., Butler, PA 16002 (US); PLYMER, Jason, W., Belle Vernon, PA 15012 (US); LUCAS, Rick, Belmont, OH 43718 (US); BLACKER, Jesse, M., St. Clairsville, OH 43950 (US); BRUNERMER, Daniel, T., Leechburg, PA 15656 (US); LIZZI, Thomas, Harmony, PA 16037 (US)
(74) Representative: Viering, Jentschura & Partner mbB Patent- und Rechtsanwälte
(86) International application number: PCT/US2014/070743
(87) International publication number: WO 2015/100086

(56) References cited:
- WO-A1-93/25336
- WO-A1-2009/017648
- US-A- 6 036 777
- US-A1- 2002 079 601
- US-A1- 2004 118 309
- US-A1- 2009 068 383
- US-A1- 2012 207 929
- US-B2- 7 027 887
- UTELA B ET AL: "A review of process development steps for new material systems in three dimensional printing (3DP)", JOURNAL OF MANUFACTURING PROCESSES, SOCIETY OF MANUFACTURING ENGINEERS, DEARBORN, MI, US, vol. 10, no. 2, 1 July 2008 (2008-07-01), pages 96-104, XP026151265, ISSN: 1526-6125, DOI: 10.1016/J.JMAPRO.2009.03.002 [retrieved on 2009-05-08]
- Sigma-Aldrich: "Material Safety Data Sheet", , 11 September 2006 (2006-09-11), Retrieved from the Internet: URL:http://www.bioeng.nus.edu.sg/cellular/ msds/637238.pdf [retrieved on 2018-06-25]

## Description

### Background

Field of the Invention: The invention relates to methods for producing articles by three-dimensional printing.

Background of the Invention: Three dimensional printing was developed in the 1990's at the Massachusetts Institute of Technology and is described in several United States patents, including the following United States patents: 5,490,882 to Sachs et al., 5,490,962 to Cima et al., 5,518,680 to Cima et al., 5,660,621 to Bredt et al, 5,775,402 to Sachs et al, 5,807,437 to Sachs et al, 5,814,161 to Sachs et al, 5,851 ,465 to Bredt, 5,869,170 to Cima et al, 5,940,674 to Sachs et al, 6,036,777 to Sachs et al., 6,070,973 to Sachs et al., 6,109,332 to Sachs et al., 6, 1 12,804 to Sachs et al, 6,139,574 to Vacanti et al, 6,146,567 to Sachs et al, 6,176,874 to Vacanti et al., 6,197,575 to Griffith et al, 6,280,771 to Monkhouse et al., 6,354,361 to Sachs et al., 6,397,722 to Sachs et al., 6,454,811 to Sherwood et al., 6,471,992 to Yoo et al., 6,508,980 to Sachs et al, 6,514,518 to Monkhouse et al, 6,530,958 to Cima et al, 6,596,224 to Sachs et al., 6,629,559 to Sachs et al., 6,945,638 to Teung et al, 7,077,334 to Sachs et al., 7,250, 134 to Sachs et al, 7,276,252 to Payumo et al, 7,300,668 to Pryce et al., 7,815,826 to Serdy et al, 7,820,201 to Pryce et al., 7,875,290 to Payumo et al., 7,931 ,914 to Pryce et al, 8,088,415 to Wang et al, 8,211 ,226 to Bredt et al., and 8,465,777 to Wang et al. From e.g. WO 93/25336 A1 a method for three-dimensionally printing an article is known, comprising the steps of: forming a layer of a build material powder, selectively printing by jet deposition on the layer a binder fluid and repeating said steps until the article is formed. From e.g. Utela et al., A REVIEW OF PROCESS DEVELOPMENT STEPS FOR NEW MATERIAL SYSTEMS IN THREE DIMENSIONAL PRINTING (3DP), Journal of manufacturing processes, Dearborn, MI, US, Vol. 10, No. 2, July 1, 2008, pages 96-104 a method for three-dimensionally printing an article is known.

In essence, three-dimensional printing involves the spreading of a layer of particulate material and then selectively jet-printing a fluid onto that layer to cause selected portions of the particulate layer to bind together. This sequence is repeated for additional layers until the desired part has been constructed. The material making up the particulate layer is often referred as the "build material" or "the build material powder" and the jetted fluid is often referred to as a "binder", or in some cases, an "activator". Post-processing of the three-dimensionally printed part is often required in order to strengthen and/or densify the part.

Various methods are used to supply each new powder layer for three-dimensional printing. For example, some three-dimensional printers have a powder reservoir box which contains powder supported upon a vertically indexable platform and use a counter-rotating roller to transfer a predetermined amount of powder from the top of the powder reservoir box to the top of a build box. Some other three-dimensional printers utilize a traveling dispenser to dispense each new layer of powder.

Despite its advantages, conventional three-dimensional printing processes have their drawbacks. One such drawback is that the surface of the resulting article has a contour resolution that is on the order of the particle layer thickness used during the three-dimensional printing process. Typically, the particle layer thickness is in the range of 50 to 500 microns.

Another drawback is that the apparent density of the printed part is essentially the same as the packing density the powder bed that is created during the three-dimensional printing process. Such densities often are in the range of about 50 to 60 % which requires a significant amount of material to be added if infiltration is to be used to densify the article. In cases where densification is to be achieved by sintering or thermomechanical processing, the low print density requires there to be a large amount of shrinkage to densify the article thus increasing the chances of the occurrence of geometrical distortion.

Another drawback is the inability to locally tailor the properties of the article since all areas receive the same binder fluid jet-deposited upon the same build material powder.

### Summary of the Present Invention

The present invention provides a method for three-dimensionally printing an article according to claim 1. Further embodiments of the method are described in the dependent claims. In one aspect, the present invention provides methods of producing dense three- dimensionally printed articles in manners which overcome the aforementioned disadvantages of the prior art. The methods of the present invention modify the three-dimensional printing process such that the binder fluid that is selectively deposited onto the powder layers contains particulate matter that is smaller than the mean particle size of the build material powder. Preferably, this jet-deposited particulate matter has a mean particle size that is greater than about 1 micron and less than or equal to 50 microns. The jet-deposited particulate matter may be compositionally the same as or different from the build material powder. The jet-deposited material acts to fill in the interparticle interstices of the build material powder thereby simultaneously increasing the density of the printed article and improving its surface roughness and contour resolution, which in turn, improves the surface finish of the final article.

Further, three-dimensional printing systems are described which have the ability to selectively deposit on the build material powder layers a binder fluid which contains particulate matter that is smaller than the mean particle size of the build material powder.

Further, three-dimensional printing systems are described which comprise a first print head system that is adapted to selectively deposit a first binder fluid and a second print head system that is adapted to selectively deposit a second binder fluid. Each of the first and second print fluid handling systems includes a binder fluid supply and a print head. At least one of the first and second print fluid handling systems is adapted to jet-deposit a binder fluid which contains particulate matter which has a mean particle size diameter that is smaller than the mean particle size of the build material powder.

In another aspect, the present invention provides methods for three- dimensionally printing articles in which selected portions of the article are printed by a first print fluid handling system and other selected portions of the article are printed by a second print fluid handling system wherein at least one of the first and second print fluid handling systems is adapted to jet deposit a binder fluid which contains particulate matter has a mean particle size diameter that is smaller than the mean particle size of the build material powder.

### Brief Description of the Drawings

The criticality of the features and merits of the present invention will be better understood by reference to the attached drawings. It is to be understood, however, that the drawings are designed for the purpose of illustration only and not as a definition of the limits of the present invention.
FIG. 1 is schematic drawing of a step of selectively jet-depositing a particle- bearing binder fluid upon a layer of build powder in accordance with an embodiment of the present invention.
FIG. 2 is a schematic drawing of a three-dimensional printing system according to an embodiment the present invention.
FIG. 3 is a schematic of a three-dimensional printing system according to an embodiment of the present invention having a first print head system and a second print head system.
FIG. 4 is a schematic depiction of a print layer upon which two different binder fluids were selectively deposited in portions of three different articles in accordance with an embodiment of the present invention.
FIG. 5 is a schematic depiction of a print layer upon which two different binder fluids were selectively deposited in portions of two different articles each having an internal feature in accordance with an embodiment of the present invention.
FIG. 6 is a schematic depiction of a print layer upon which five different binder fluids were selectively deposited in portions of an article having an internal feature in accordance with an embodiment of the present invention.
FIG. 7 is a schematic depiction of a print layer upon which two different binder fluids were selectively deposited in portions of an article, including a portion in which both binder fluids were deposited, in accordance with an embodiment of the present invention.
FIG. 8 is a schematic depiction of a binder handling system according to an embodiment of the present invention.

### Description of Preferred Embodiments

In this section, some preferred embodiments of the present invention are described in detail sufficient for one skilled in the art to practice the present invention without undue experimentation. It is to be understood, however, that the fact that a limited number of preferred embodiments are described herein does not in any way limit the scope of the present invention as set forth in the appended claims. It is to be understood that whenever a range of values is described herein or in the appended claims that the range includes the end points and every point therebetween as if each and every such point had been expressly described. Unless otherwise stated, the word "about" as used herein and in the appended claims is to be construed as meaning the normal measuring and/or fabrication limitations related to the value which the word "about" modifies. Unless expressly stated otherwise, the term "embodiment" is used herein to mean an embodiment of the present invention.

The methods of the present invention comprise three-dimensionally printing articles by selectively jet-depositing a particle-bearing binder fluid upon successive layers of a build material powder such that the particles of the fluid increase the apparent density of the as-printed article. As those skilled in the art will recognize, apparent density refers to the density that a porous article has compared to the density which the article would have if its pores were eliminated. The particulate matter of the fluid is smaller than the mean particle size of the build material powder. Preferably, this jet-deposited particulate matter has a mean particle size that is in the size range of about 1 to 50 microns. The jet-deposited material acts to fill in the interparticle interstices of the build material powder thereby simultaneously increasing the density of the printed article and improving its surface roughness and contour resolution, which in turn, improves the surface finish of the final article.

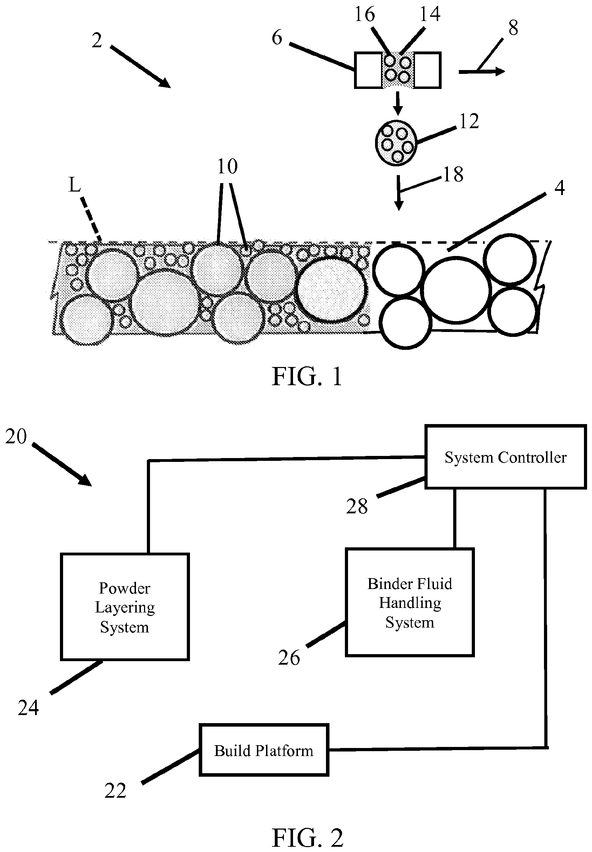

FIG. 1 shows a schematic representation of a portion of a three-dimensional printing system **2** performing a step of a three-dimensional printing method in accordance with the present invention. The system **2** includes a powder layer **4** that is the top layer of a powder bed in which an article is being built and a print nozzle **6** which is moving relative to the powder layer **4** in the direction indicated by arrow **8.** The powder layer **4** comprises particles of the build material powder **10,** which have a mean particle size diameter of D₁. As the nozzle **6** moves along, it jets droplets, e.g. droplet **12,** of a binder fluid **14** containing particulate matter **16** in the direction of arrow **18** so that they impinge the powder layer **4.** As the droplets impinge the powder layer **4,** the binder fluid **14** they contain spreads out into the powder layer **4** (as indicated by the grey shading in the left-hand side of the powder layer **4**) as does the particulate matter **16** they contain. Note that the particulate matter **16** has a mean particle size diameter of D₂ which is smaller than D₁. The presence of the particulate matter **16** helps to smooth the surface of the powder layer **4** as is evident by comparing the left side of the powder layer **4** into which the particulate-bearing binder fluid **14** has been jetted and the right hand side of the powder layer **4** which has not yet received any of the binder fluid **14** with the dotted reference line **L.**

The build material powder may be any desired particulate matter that is compatible with the three-dimensional printing process and the binder fluid that is to be used and the article that is to be built. The build material powder may be a metal, metal alloy, ceramic, form of carbon (e.g., graphite, coke, carbon black, etc.), or polymer, or any combination thereof. The build material powder may comprise particles of one material which are coated with another, e.g. tungsten particles coated with copper or sand particles coated with resin. The build material powder may have any particle size that is compatible with the three-dimensional printing process. Preferably, the build material powder has a mean particle size diameter in the range of about 10 to about 500 microns, and more preferably in the range of about 15 to about 300 microns, and even more preferably in the range of about 20 to about 200 microns. It is to be understood that the actual particle size distribution of a build material powder will include particle sizes both above and below the mean particle size diameter.

The jetted-particulate matter may be any desired particulate matter that is compatible with the binder fluid and being suspended within the binder fluid for serviceable times. The jetted-particulate matter is to be chosen to yield the desired properties in combination with the build material powder material during the processing of the article from the three-dimensional printing stage through any heat treatments and finishing operations. The jetted-particulate matter may be chosen to be compositionally the same as or similar to or different from the build material powder. It may be chosen to alloy with or otherwise react with or interact with (e.g. by creating a stress field) the build material powder material during the processing of the article from the three-dimensional printing stage through any heat treatments and finishing operations. The jetted-particulate matter is chosen to have a particle size distribution that will avoid blockage in any portion of the binder handling system portion of the three-dimensional printer, especially the orifices and passageways in portions of the print heads. Preferably, the mean particle size diameter of the jetted-particulate matter is greater than about 1 micron and no more than about 50 microns, but it may be greater than 50 microns, provided that the binder fluid handling system is adapted to accommodate the particle size without blockages that would make the jetting impractical. In some embodiments, the mean particle size diameter of the jetted-particulate matter may be less than 1 micron, even down to 1 nanometer. More preferably, the mean particle size diameter of the jetted-particulate matter is in the range of about 2 microns to about 20 microns, and even more preferably in the range of about 2 microns to about 10 microns. In some embodiments, it is preferred that the mean particle size diameter of the jetted-particulate matter is less than about 5 microns. It is also desirable to select the mean particle size diameter of the jetted-particulate matter so that it is about one seventh or less than that of the build material powder. It is to be understood that the actual particle size distribution of a jetted-particulate matter will include particle sizes both above and below the mean particle size diameter.

The binder fluid may be any binder fluid that is compatible with the three-dimensional printing system and the build material powder that are being used to make the desired article. The binder fluid is to include a binder, i.e. a component that acts to bind together the build material powder particles by means other than liquid surface tension, e.g. a polymer, and carrier fluid, which is sometimes referred to as a "solvent" whether or not it actually dissolves anything of relevance to the operation. The binder fluid may also include one or more agents which either alone or in concert adjust one or more of the surface tension, evaporation rate, and the viscosity of the binder fluid. The binder fluid preferably also includes an agent which aids in the suspension of the jetted-particulate matter.

To aid the jetted-particulate matter from settling out of the binder fluid, the binder fluid handling system of the three-dimensional printing system may be provided with a means for mixing the j etted-particulate matter and the binder fluid. For example, in-line mixers may be used in one or more of the system's conduits; one or more binder fluid reservoirs may be provided with spinning mixing blades; sub-sonic, sonic, or ultrasonic vibrations may be applied to the mixing fluid; a recirculation system may be included to recirculate the binder fluid at speeds that avoid particulate settling; or any combination of the foregoing may be included.

The loading of binder fluid with the jetted-particulate matter is to be selected based on several factors. These include, the amount of jetted-particulate matter that is desired to be deposited for a predetermined print head traverse speed and droplet size, with higher deposited amounts requiring higher levels of particulate-loading. Another factor is particulate- loading must be controlled so as to stay within the range of viscosities that the print head system is capable of handling. Another factor is that the particulate-loading (along with droplet size) must be controlled so as prevent the momentum transfer that occurs upon the impact of the droplet with the powder layer from causing unwanted disruptions to the powder layer. Another factor is the effect the particulate-loading might have on the evaporation rate of the binder fluid's carrier fluid and this is to be controlled so that the carrier fluid evaporation occurs at a sufficiently high rate so as to permit the three-dimensional printing process to proceed without the deposition of a succeeding powder layer from disrupting its underlying printed layer. Another factor is that the particulate-loading must not be so high as to cause blockage of the binder fluid handling system by way of accretion or settling out of portions of the jetted- particulate matter. Of high importance is keeping the particulate-loading sufficiently low so as to permit the controlled formation of the desired-sized jetted binder fluid droplets. Preferably, the particulate-loading is such that the volume percent of the jetted-particulate matter of the binder fluid is in the range of about 1 to about 20 %.

The present invention also includes three-dimensional printing systems which are adapted to selectively deposit on build material powder layers a binder fluid which contains particulate matter having a mean particle size diameter that is smaller than the mean particle size diameter of the build material powder. As schematically depicted in FIG. 2, such a system 20 includes a build platform 22 adapted to receive successive layers of a build material powder, a powder layering system **24** adapted to apply successive layers of the build material powder to the build platform **22,** a binder fluid handling system **26** adapted to selectively jet binder fluid onto the successive powder layers, and a control system **28** which is adapted to provide the overall control of the system **20.** The build platforms and powder layering systems described in the prior art may be included into embodiments of the inventive system.

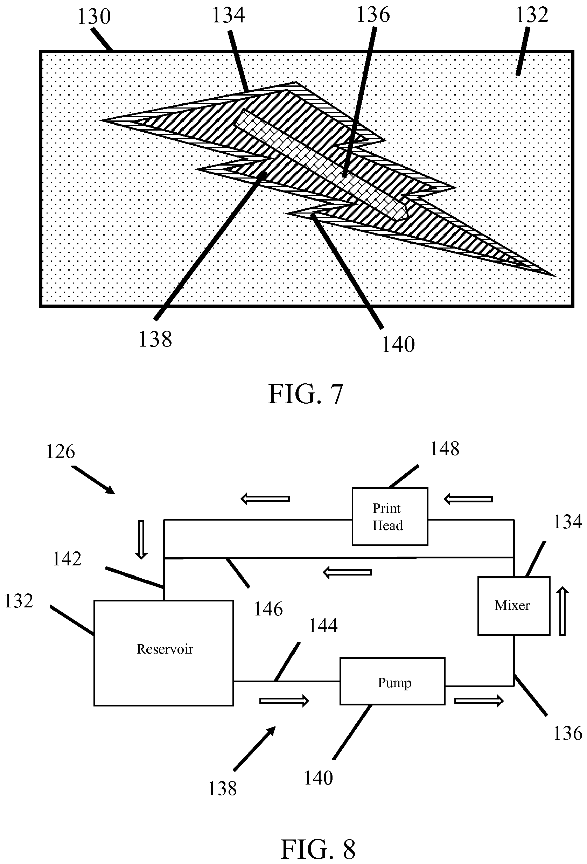

The binder handling systems of the inventive three-dimensional printing systems must be adapted to utilize the particle-laden binder fluids described above without blockages that would make system operation impractical. To accomplish this, the orifice sizes and fluid flow rates through the orifices and fluid conduits of such binder handling systems must be selected to prevent blockage by accretion or settling out of particulates of the jetted-particulate matter. Preferably, the binder handling systems, e.g. binder handling system **126** shown in FIG. 8, include a mechanically-stirred binder fluid reservoir, e.g. mechanically-stirred binder fluid reservoir **132.** It is also preferred to include one or more in-line mixing elements, e.g. in-line mixer **134,** in one or more transfer lines, e.g. transfer line **136** of the binder handling system, these mixers being sized to accommodate the flow rates and particle sizes being used. It is also preferred to use a recirculation system, e.g. recirculation system **138,** comprising a pump, e.g. pump **140,** and transfer lines into and out of the binder fluid reservoir, e.g, transfer lines **142, 144, 146,** to recirculate the binder fluid so as to discourage particulate settling.

It is also preferred that the binder handling system include a print head **148** through which the binder fluid may be recirculated to the binder fluid reservoir. Preferably, such a print head will utilize a design having a common local reservoir for a plurality of printing orifices, such as is described in U.S. Application Publication No. US 2012/0274686 A1 published on November 1, 2012.

The control systems of the prior art may be utilized with the embodiments so long as they are modified to operate the chosen binder handling system.

It is to be understood that all of the components of the binder handling system which come into contact with the binder fluid should be made of wear resistant materials. The selection of the degree of wear resistance for such materials will be affected by the expected types of jetted-particulate matters and binder fluid flow rates that are to utilized during the operation of the binder fluid system as well as the amount of use the binder handling fluid system that is expected. The selection of components with high wear resistance will be beneficial where the jetted-particulate matters are abrasive or the binder fluid flow rates are high or the binder fluid system is expected to be heavily used.

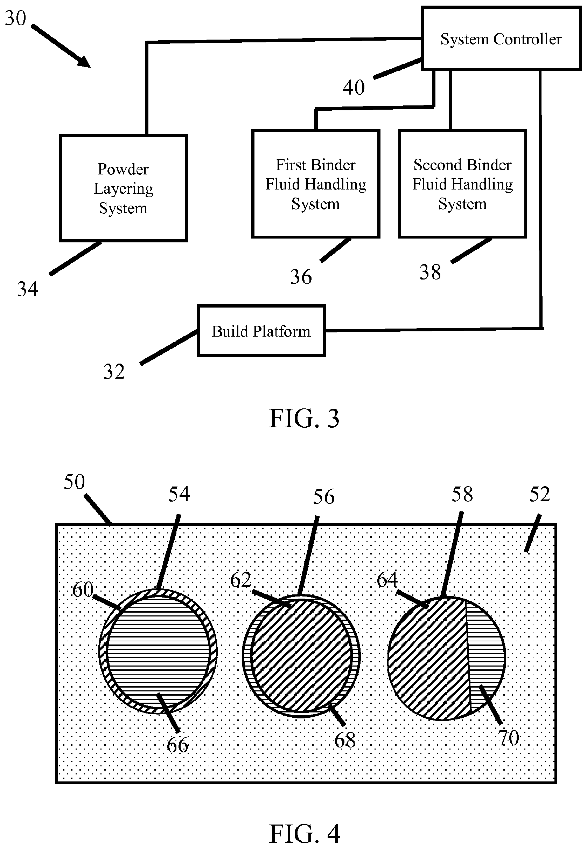

The present invention also includes three-dimensional printing systems as described above except that they comprise a plurality of print fluid handling systems in which at least one of the print fluid handling systems is adapted to jet deposit a binder fluid which contains a particulate matter as described above. FIG. 3 schematically depicts such a system as three-dimensional printing system 30. System 30 includes a build platform 32, a powder layering system 34, a first binder fluid handling system 36, a second binder fluid handling system 38, and a system controller 40 which is adapted to provide the overall control of the system 30. Each of the first and second binder fluid handling systems 36, 38 includes a source of a binder fluid and a print head adapted to selectively jet-deposit that binder fluid. Each of the first and second binder fluid handling systems 36, 38 may have its own carriage device for positioning its respective print head to selectively jet deposit its respective first or second binder fluid, though, preferably, the first and second binder fluid handling systems 36, 38 share all or portions of a common carriage device. For example, the respective print heads of the first and second binder fluid handling systems 36, 38 may be carried by a common or separate trolleys in one direction, e.g. the x-direction, and ride on a common or separate trolleys in another direction, e.g. the y-direction.

A three-dimensional printing system 30 may be configured so that both of the first and second binder fluid handling systems 36, 38 may utilize a binder fluid which contains particulate matter as described above. In such a three-dimensional printing system 30, one or more characteristics of the respective binder fluids of the first and second binder fluid handling systems 36, 38 are different so that it is necessary to utilize two separate binder handling systems. Such characteristics can relate to the particulate matter, e.g. material composition, mean particle size diameter, particle size distribution, particle morphology, etc., or to the non- particulate matter characteristics of the binder fluid, e.g. the composition or amounts of one or more of the binder and the carrier fluid, and the composition or amounts of any of the various agents for controlling, either alone or in concert, the surface tension, evaporation rate, viscosity, and the particulate suspension capability of the binder fluid.

In some preferred embodiments, the binder fluid utilized by the first binder fluid handling system is similar to that utilized by the second binder fluid handling system except that the latter binder fluid contains particulate matter while the former binder fluid does not.

It is to be understood that while only a first and a second binder fluid handling systems are described with relation to FIG. 3, the present invention includes embodiments having more than just two binder fluid handling systems, wherein at least two of the binder handling systems utilize binder fluids that are different from one another and at least one of the binder fluids includes the particulate matter as described above.

The present invention also includes methods of three-dimensionally printing articles which utilize a three-dimensional printing system which comprises a first print fluid handling system and a second print fluid handling system in which at least one of the first and second print fluid handling systems is adapted to jet a binder fluid which contains a particulate matter as described above. Such methods include selectively printing a first print fluid in some locations and selectively printing a second print fluid in other locations within article or in locations which overlap in part or in whole the locations in which the first print fluid was printed. Some illustrative embodiments of such methods will now be discussed. It should be kept in mind when reading through these embodiments that the selective deposition of a binder fluid containing particulate matter at an exterior or interior surface of an article has the effect of improving the article's surface finish. It is also be to be kept in mind that the particulate matter selectively deposited with a binder fluid can be used to locally tailor the physical properties of the article, e.g. by alloying with the build material powder, increasing densification, acting as a local infiltrant or infiltrant barrier during heat treatment, locally modulating the local stress fields (e.g. by a mismatch of thermal coefficients of expansion), etc.

Referring to FIG. 4, there is schematically shown a layer **50** of a build material powder **52** (indicated by a field of small dots) which has been spread during the building of three articles, first article **54,** second article **56,** and third article **58,** by three-dimensional printing in accordance with a method embodiment. A first print handling system using a first binder fluid was employed to print and the areas in which this first binder fluid was selectively printed, areas **60, 62, 64,** are indicated by diagonal hatching. A second print handling system using a second binder fluid was employed to print and the areas in which this second binder fluid was selectively printed, areas **66**, **68, 70,** are indicated by horizontal hatching. The second binder contained a particulate matter as described above. For the portion of layer **50** which was used to print a slice of first article **54,** the peripheral area **60** of this slice was printed using the first binder and the interior area **66** was printed using the second binder. For the portion of layer **50** which was used to print a slice of second article **56,** the interior area **62** of this slice was printed using the first binder and the peripheral area **68** was printed using the second binder. For the portion of layer **50** which was used to print a slice of third article **58,** the left-side area **64** of this slice was printed using the first binder and the right-side area **70** was printed using the second binder.

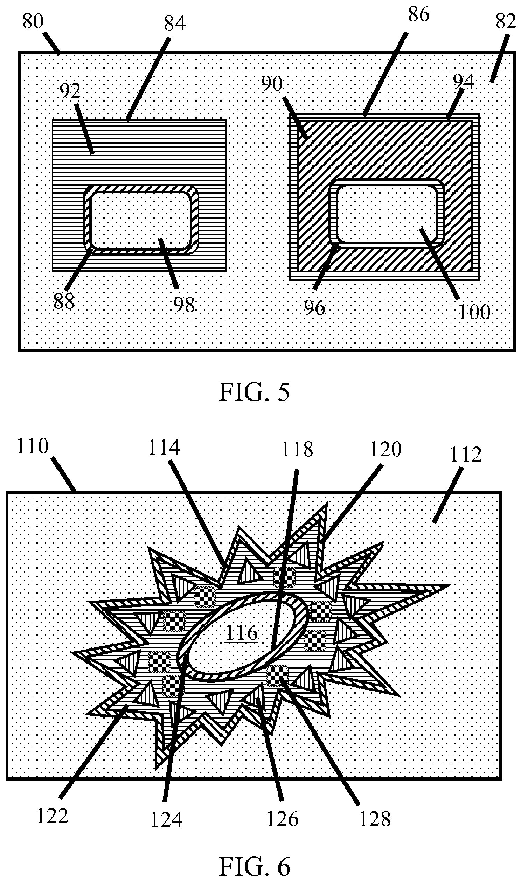

Referring to FIG. 5, there is schematically shown a layer **80** of a build material powder **82** (indicated by a field of small dots) which has been spread during the building of two articles, fourth article **84** and fifth article **86,** by three-dimensional printing in accordance with a method embodiment. A first print handling system using a first binder fluid was employed to print and the areas in which this first binder fluid was selectively printed, areas **88, 90,** are indicated by diagonal hatching. A second print handling system using a second binder fluid was employed to print and the areas in which this second binder fluid was selectively printed, areas **92, 94, 96,** are indicated by horizontal hatching. The second binder contained a particulate matter as described above. Each of the fourth and fifth articles **84, 86,** have in their respective slices an unprinted internal feature, e.g. a passageway, internal features **98, 100** respectively. For the portion of layer **80** which was used to print a slice of fourth article **84,** the area **88** of this slice around the periphery of the internal feature **98** was printed using the first binder and the major area **92** was printed using the second binder. For the portion of layer **80** which was used to print a slice of fifth article **86,** the interior area **90** of this slice was printed using the first binder and the peripheral area **94** as well as the periphery **96** of the internal feature **100** were printed using the second binder.

Referring to FIG. 6, there is schematically shown a layer **110** of a build material powder **112** (indicated by a field of small dots) which has been spread during the building of a single article, sixth article **114,** by three-dimensional printing in accordance with a method embodiment. The slice of the sixth article **114** that is in layer **110** has an unprinted internal feature **116,** which could be a passageway, having an internal surface **118.** In this embodiment, five different binding fluid handling systems were employed. A first binder fluid was deposited in the areas **120** as indicated by diagonal hashing which slants downwardly left-to-right. A second binder fluid was deposited in the areas **122** as indicated by horizontal hashing. A third binder fluid was deposited in the areas **124** as indicated by diagonal hashing which slants upwardly left-to-right. A fourth binder fluid was deposited in the areas **126** as indicated by vertical hashing. A fifth binder fluid was deposited in the areas **128** as indicated by checkerboard hashing. The characteristics of these binder fluids are given in Table 1 below:

**TABLE 1**

| **Identification** | **Binder Type** | **Carrier Fluid Type** | **Particulate Matter Type** | **Particulate Matter Mean Size Diameter** |
|---|---|---|---|---|
| First binder fluid | Polymer A | Fluid A | Alloy A | 20 Microns |
| Second binder fluid | Polymer A | Fluid A | None | Not applicable |
| Third binder fluid | Polymer A | Fluid A | Alloy A | 10 microns |
| Fourth binder fluid | Polymer B | Fluid B | Alloy A | 20 microns |
| Fifth binder fluid | Polymer A | Fluid A | Alloy B | 5 microns |

Referring to FIG. 7, there is schematically shown a layer **130** of a build material powder **132** (indicated by a field of small dots) which has been spread during the building of a single article, seventh article **134,** by three-dimensional printing in accordance with a method embodiment. This embodiment illustrates the use of overlap printing of two binder fluids in area **136** as indicated by brick-pattern hatching. A first print handling system was used to print a first binder fluid in the overlap area **136** as well as in area **138,** which is indicated by diagonal hatching. A second print handling system was used to print a second binder fluid in the overlap area **136** as well as in area **140,** which is indicated by horizontal hatching.

Although the overlap area **136** is shown in FIG. 7 as being within the interior portion seventh article **134,** in some embodiments, it is preferred to have an overlap area that includes an inner or outer surface of the article that is being three-dimensionally printed. This is especially preferred when each of the binder fluids being deposited includes a particulate matter so that the combined deposition of these particulate matters provides a benefit with regard to one or more of surface finish, density, or the composition of the surface.

## Claims

1. A method for three-dimensionally printing an article (**114**) comprising the steps of:
(a) forming a layer (**4**) of a build material powder (**10**), the build material powder (**10**) having a mean particle size diameter;
(b) selectively printing by jet deposition on the layer (**4**) at least one of a first binder fluid and a second binder fluid, wherein the first binder fluid contains a first particulate matter (**16**) having a first mean particle size diameter which is less than the mean particle size diameter of the build material powder (**10**) and is greater than 1 micron and the first binder fluid has characteristics which are different from those of the second binder fluid; and
(c) repeating steps (a) and (b) until the article is formed;
wherein the first binder fluid is deposited on the then-current layer in at least one of the instances of performing step (b), and wherein the second binder fluid is deposited on the then-current layer in at least one of the instances of performing step (b).

2. The method of claim 1, wherein the first binder fluid has a binder loading of the first particulate matter (16) in the range of between 1 and 20 volume percent.

3. The method of claim 1, wherein the article (**114**) has a surface and a first region (**120**) including the surface, the method including the step of performing steps (b) and (c) so as to selectively print the first binder fluid in the first region (**120**).

4. The method of claim 3, wherein the surface is that of an interior feature (**116**) of the article (**114**).

5. The method of claim 3, wherein the article has a second region (**122**) adjacent to the first region (**120**), the second region (**122**) being different from the first region (120), the method including the step of performing the steps (b) and (c) so as to selectively print the second binder fluid in the second region (**122**).

6. The method of claim 1, wherein the second binder fluid contains a second particulate matter, the second particulate matter being compositionally the same as or different from the first particulate matter and having a second mean particle size diameter which is the same as or different from the first mean particle size diameter.

7. The method of claim 6, wherein the first mean particle size diameter is greater than the second mean particle size diameter.

8. The method of claim 1, wherein the first mean particle size diameter is no greater than 50 microns.

9. The method of claim 1, wherein the first mean particle size diameter is no greater than 20 microns.

10. The method of claim 1, the method including the step of performing steps (b) and (c) so as to selectively print the first and second binder fluids in a common region (**136**) of the article (**134**).

11. The method of claim 10, wherein the article (**134**) has a surface and the common region (**136**) is near or includes an inner or an outer surface of the article (**134**).

12. The method of claim 1, further comprising the step of heat treating the article (**134**) to alloy the first particulate matter with the build material powder (**10**).

13. The method of claim 1, further comprising the step of heat treating the article **(134)** to cause the first particulate matter to act as a local infiltrant.

14. The method of claim 1, further comprising the step of heat treating the article **(134)** to cause the first particulate matter to act as an infiltrant barrier.

15. The method of claim 1, further comprising the steps of
selecting the first particulate matter to have a different thermal coefficient of expansion from that of the build material powder **(10)** and
heat treating the article **(134)** to cause the first particulate material to modulate a local stress field of the article **(134).**

## Patentansprüche

1. Ein Verfahren zum dreidimensionalen Drucken eines Artikels (114), die Schritte aufweisend:
(a) Formen einer Schicht (4) aus einem Baumaterialpulver (10), wobei das Baumaterialpulver (10) einen mittleren Partikelgrößendurchmesser hat,
(b) selektives Drucken durch Strahlablagern auf der Schicht (4) zumindest eines von einem ersten Bindemittelfluid und einem zweiten Bindemittelfluid, wobei das erste Bindemittelfluid ein erstes Partikelmaterial (16) enthält, welches einen ersten mittleren Partikelgrößendurchmesser hat, der geringer ist als der mittlere Partikelgrößendurchmesser des Baumaterialpulvers (10) und größer ist als 1 Mikrometer, und das erste Bindemittelfluid Charakteristiken hat, welche von denen des zweiten Bindemittelfluids verschieden sind, und
(c) Wiederholen der Schritte (a) und (b), bis der Artikel geformt ist,
wobei das erste Bindemittelfluid auf der dann gegenwärtigen Schicht in zumindest einem der Vorgänge des Ausführens des Schritts (b) abgelagert wird und wobei das zweite Bindemittelfluid auf der dann gegenwärtigen Schicht in zumindest einem der Vorgänge des Ausführens des Schritts (b) abgelagert wird.

2. Das Verfahren gemäß Anspruch 1, wobei das erste Bindemittelfluid eine Bindemittelbeladung des ersten Partikelmaterials (16) in dem Bereich von 1 bis 20 Volumenprozent hat.

3. Das Verfahren gemäß Anspruch 1, wobei der Artikel (114) eine Fläche und einen ersten Bereich (120) hat, welcher die Fläche aufweist, wobei das Verfahren den Schritt des Ausführens der Schritte (b) und (c) aufweist, um selektiv das erste Bindemittelfluid im ersten Bereich (120) zu drucken.

4. Das Verfahren gemäß Anspruch 3, wobei die Fläche die eines innenliegenden Merkmals (116) des Artikels (114) ist.

5. Das Verfahren gemäß Anspruch 3, wobei der Artikel einen zweiten Bereich (122) benachbart zum ersten Bereich (120) hat, wobei der zweite Bereich (122) vom ersten Bereich (120) verschieden ist, wobei das Verfahren den Schritt des Ausführens der Schritte (b) und (c) aufweist, um das zweite Bindemittelfluid im zweiten Bereich (122) selektiv zu drucken.

6. Das Verfahren gemäß Anspruch 1, wobei das zweite Bindemittelfluid ein zweites Partikelmaterial enthält, das zweite Partikelmaterial die gleiche Zusammensetzung wie das erste Partikelmaterial hat oder davon verschieden ist und einen zweiten mittleren Partikelgrößendurchmesser hat, welcher gleich oder verschieden zum ersten mittleren Partikelgrößendurchmesser ist.

7. Das Verfahren gemäß Anspruch 6, wobei der erste mittlere Partikelgrößendurchmesser größer ist als der zweite mittlere Partikelgrößendurchmesser.

8. Das Verfahren gemäß Anspruch 1, wobei der erste mittlere Partikelgrößendurchmesser nicht größer als 50 Mikrometer ist.

9. Das Verfahren gemäß Anspruch 1, wobei der erste mittlere Partikelgrößendurchmesser nicht größer als 20 Mikrometer ist.

10. Das Verfahren gemäß Anspruch 1, wobei das Verfahren den Schritt des Ausführens der Schritte (b) und (c) aufweist, um das erste und das zweite Bindemittelfluid in einem gemeinsamen Bereich (136) des Artikels (134) selektiv zu drucken.

11. Das Verfahren gemäß Anspruch 10, wobei der Artikel (134) eine Fläche hat und der gemeinsame Bereich (136) nahe an einer inneren oder äußeren Fläche des Artikels (134) liegt oder diese aufweist.

12. Das Verfahren gemäß Anspruch 1, weiter den Schritt des Wärmebehandelns des Artikels (134) aufweisend, um das erste Partikelmaterial mit dem Baumaterialpulver (10) zu legieren.

13. Das Verfahren gemäß Anspruch 1, weiter den Schritt des Wärmebehandelns des Artikels (134) aufweisend, um das erste Partikelmaterial als ein lokales Tränkungsmittel wirken zu lassen.

14. Das Verfahren gemäß Anspruch 1, weiter den Schritt des Wärmebehandelns des Artikels (134) aufweisend, um das erste Partikelmaterial als eine Tränkungsmittelbarriere wirken zu lassen.

15. Das Verfahren gemäß Anspruch 1, weiter die Schritte aufweisend
Auswählen des ersten Partikelmaterials, um einen anderen thermischen Expansionskoeffizienten als der des Baumaterialpulvers (10) zu haben, und
Wärmebehandeln des Artikels (134), um das erste Partikelmaterial zu bedingen, ein lokales Spannungsfeld des Artikels (134) zu modulieren.

## Revendications

1. Procédé d'impression tridimensionnelle d'un article (114), comprenant les étapes suivantes :
a) formation d'une couche (4) d'une poudre de matériau de construction (10), la poudre de matériau de construction (10) ayant un diamètre moyen de particule ;
b) impression sélective par dépôt de jet sur la couche (4) d'au moins l'un parmi un premier liant fluide et un second liant fluide, dans lequel le premier liant fluide contient des premières particules (16) ayant un premier diamètre moyen de particule qui est inférieur au diamètre moyen de particule de la poudre de matériau de construction (10) et qui est supérieur à 1 micron et le premier liant fluide présente des caractéristiques qui sont différentes de celles du second liant fluide ; et
c) répétition des étapes a) et b) jusqu'à ce que l'article soit formé ;
dans lequel le premier liant fluide est déposé sur la couche alors actuelle dans au moins une des instances de réalisation de l'étape b), et dans lequel le second liant fluide est déposé sur la couche alors actuelle dans au moins une des instances de réalisation de l'étape b).

2. Procédé selon la revendication 1, dans lequel le premier liant fluide a une charge de liant des premières particules (16) dans la plage comprise entre 1 et 20 pour cent en volume.

3. Procédé selon la revendication 1, dans lequel l'article (114) possède une surface et une première région (120) comprenant la surface, le procédé comprenant l'étape de réalisation des étapes b) et c) de manière à imprimer sélectivement le premier liant fluide dans la première région (120).

4. Procédé selon la revendication 3, dans lequel la surface est celle d'un élément intérieur (116) de l'article (114).

5. Procédé selon la revendication 3, dans lequel l'article possède une seconde région (122) adjacente à la première région (120), la seconde région (122) étant différente de la première région (120), le procédé comprenant l'étape de réalisation des étapes b) et c) de manière à imprimer sélectivement le second liant fluide dans la seconde région (122).

6. Procédé selon la revendication 1, dans lequel le second liant fluide contient des secondes particules, les secondes particules étant identiques aux premières particules ou différentes de celles-ci en termes de composition et ayant un second diamètre moyen de particule qui est identique au premier diamètre moyen de particule ou différent de celui-ci.

7. Procédé selon la revendication 6, dans lequel le premier diamètre moyen de particule est supérieur au second diamètre moyen de particule.

8. Procédé selon la revendication 1, dans lequel le premier diamètre moyen de particule ne dépasse pas 50 microns.

9. Procédé selon la revendication 1, dans lequel le premier diamètre moyen de particule ne dépasse pas 20 microns.

10. Procédé selon la revendication 1, le procédé comprenant l'étape de réalisation des étapes b) et c) de manière à imprimer sélectivement les premier et second liants fluides dans une région commune (136) de l'article (134).

11. Procédé selon la revendication 10, dans lequel l'article (134) possède une surface et la région commune (136) est proche d'une surface interne ou externe de l'article (134) ou comprend ladite surface interne ou externe.

12. Procédé selon la revendication 1, comprenant en outre l'étape de traitement thermique de l'article (134) pour allier les premières particules avec la poudre de matériau de construction (10).

13. Procédé selon la revendication 1, comprenant en outre l'étape de traitement thermique de l'article (134) pour amener les premières particules à agir comme un infiltrant local.

14. Procédé selon la revendication 1, comprenant en outre l'étape de traitement thermique de l'article (134) pour amener les premières particules à agir comme une barrière anti-infiltration.

15. Procédé selon la revendication 1, comprenant en outre les étapes suivantes
sélection des premières particules de sorte qu'elles aient un coefficient de dilatation thermique différent de celui de la poudre de matériau de construction (10) et
traitement thermique de l'article (134) pour amener les premières particules à moduler un champ de contrainte local de l'article (134).
